# EUROPEAN PATENT SPECIFICATION

(11) **EP 3 733 800 B1**
(45) Date of publication and mention of the grant of the patent: **04.09.2024**
(21) Application number: 18895077.8
(22) Date of filing: 11.12.2018
(51) Int. Cl.: C08L 91/08, C09D 5/00, C09D 5/08, C09D 7/61, C09D 7/63

(54) **METAL SURFACE TREATMENT COMPOSITION HAVING EXCELLENT SLIP RESISTANCE, AND METAL MATERIAL TO WHICH SAME IS APPLIED**
METALLOBERFLÄCHENBEHANDLUNGSZUSAMMENSETZUNG MIT AUSGEZEICHNETER RUTSCHFESTIGKEIT UND METALLMATERIAL, AUF DAS SIE AUFGEBRACHT WIRD
COMPOSITION DE TRAITEMENT DE SURFACE MÉTALLIQUE PRÉSENTANT UNE EXCELLENTE RÉSISTANCE AU GLISSEMENT, ET MATÉRIAU MÉTALLIQUE AUQUEL LA COMPOSITION EST APPLIQUÉE

(30) Priority: 26.12.2017 KR 20170179042
(43) Date of publication of application: 04.11.2020
(73) Proprietor: POSCO Co., Ltd, Pohang-si, Gyeongsangbuk-do 37859 (KR)
(72) Inventor: KIM, Jin-Tae, Gwangyang-si, Jeollanam-do 57807 (KR); KIM, Myung-Soo, Gwangyang-si, Jeollanam-do 57807 (KR); LEE, Jung-Hwan, Gwangyang-si, Jeollanam-do 57807 (KR); CHOI, Ha-Na, Gwangyang-si, Jeollanam-do 57807 (KR)
(74) Representative: Meissner Bolte Partnerschaft mbB
(86) International application number: PCT/KR2018/015714
(87) International publication number: WO 2019/132325

(56) References cited:
- WO-A1-2017/095069
- CN-A- 104 403 538
- JP-A- H0 966 262
- JP-B2- 5 501 055
- KR-A- 20060 133 164
- KR-A- 20120 025 803
- KR-A- 20150 073 023

## Description

### [Technical Field]

The present invention relates to a metal surface treatment composition having excellent slip resistance, and a metal material to which the same is applied.

### [Background Art]

Generally, to alleviate slippage of a surface of a tile, marble, and the like, used as a finishing material for a wall or a floor of a bathroom, a pool, and the like, a composition containing an ammonia fluoride component and a reaction modifier such as ammonium hydroxide are added to prevent slippage or slip properties.

Japanese Laid-Open Patent Publication No. 1994-279748, U.S. Patent No. 5,223,168, Japanese Laid-Open Patent Publication No. 1988-159278, and the like, disclose an anti-slip agent in the form of aqueous solution including a hydrogen fluoride aqueous solution as a main component or including fluoride salts such as ammonia fluoride as a main component and additionally including a surfactant to alleviate slipping of a surface of an inorganic floor material as above.

However, when a chemical material as above is applied to secure slip resistance of a steel material such as a stainless steel sheet, solution stability may degrade, and corrosion resistance may be weakened, which may be a problem.

Further, in the case in which inorganic coating or corrosion resistance coating is applied to a steel material, when a processing oil such as water or crude oil is introduced to a surface of a material, a water film phenomenon occurs on a surface of the material such that slippage may increase. Accordingly, due to damage and slipping of the material, a process delay may occur, or a serious safety accident may occur.

However, there has been no anti-slip agent applied to a steel material such as a stainless steel sheet for slip resistance, prevention of slipping, and accordingly, the demand for a technique which may improve slip resistance of a surface of a steel material has been increased.

### [Prior Art]

### [Reference]

Japanese Laid-Open Patent Publication No. 1994-279748
U.S. Laid-Open Patent Publication No. 5,223,168
Japanese Registered Patent Publication No. 1988-159278

### [Disclosure]

### [Technical Problem]

The present invention is to address the issue described above and, and the purpose of the present invention is to provide a metal surface treatment composition which may secure properties such as corrosion resistance, workability, and the like, of a metal material such as steel, and the like, and also stable slip resistance, and a metal material to which the same is applied.

### [Technical Solution]

According to an aspect of the present invention, provided is a chromium-free metal surface treatment composition including 10-30 parts by weight of a silane-based compound, 0.5-6 parts by weight of an organic acid, 0.1-3 parts by weight of a vanadium compound, 0.1-3 parts by weight of a magnesium compound, 0.5-3 parts by weight of a wax and a balance of a solvent, wherein the wax is a polypropylene wax and wherein the weight average molecular weight of the wax is 2,000-10,000.

A melting point of a wax may be 130-160°C.

An organic acid may be one or more selected from among formic acid, phosphoric acid, and acetic acid.

A silane-based compound may be one or more selected from a group consisting of epoxy-based silane and amino-based silane.

Epoxy-based silane may be one or more selected from among vinylmethoxy silane, vinyltrimethoxy silane, vinylepoxy silane, vinyltriepoxy silane, 3-aminopropyltriepoxy silane, 3-glycidoxy propyltrimethoxy silane, 3-methacryloxypropyltrimethoxy silane, 3-mercaptopropyl trimethoxy silane, N-(1,3-dimethylbutylidene)-3-(triepoxy silane)-1-propanamine, and N,N-bis[3-(trimethoxysilyl) propyl] ethylenediamine.

Amino-based silane may be one or more selected from among N-(β-aminoethyl)-γ-amino propylmethyldimethoxysilane, N-(β-aminoethyl)-γ-aminopropyltrimethoxysilane, γ-glycidoxypropyltriethoxysilane, γ-glycine cydoxitrimethyldimethoxysilane, 2-(3,4-epoxycyclohexyl)ethyltrimethoxysilane, γ-methacryloxypropyltrimethoxysilane, γ-methacryloxypropyltriethoxysilane, γ-mercaptopropyltrimethoxysilane, γ-mercapto propyltriethoxysilane, 3-amino propyl triethoxy silane, and N-[2-(vinylbenzylamino)ethyl]-3-aminopropyltrimethoxysilane.

The chromium-free metal surface treatment composition may further include 0.01-1 parts by weight of a defoamer and 1-2 parts by weight of a wetting agent.

A defoamer may be n-methylethanol amine.

The wetting agent may be one or more selected from among isopropyl alcohol, 2-ethyl-1-hexanol, 2-butoxyethanol, dipropylene glycol, ethylene glycol, n-propyl alcohol, and propylene glycol.

According to another aspect of the present invention, a surface treatment metal material having excellent slip resistance including a metal material; and a coating layer formed on the metal material, and formed as a cured product of a metal surface treatment composition including 10-30 parts by weight of a silane-based compound, 0.5-6 parts by weight of an organic acid, 0.1-3 parts by weight of a vanadium compound, 0.1-3 parts by weight of a magnesium compound, 0.5-3 parts by weight of a wax and a balance of a solvent, wherein the wax is a polypropylene wax and wherein the weight average molecular weight of the wax is 2,000-10,000.

A thickness of the coating layer may be 0.5-10µm.

A coefficient of friction of the coating layer may be 0.4-0.6.

A melting point of a wax may be 130-160°C.

The metal surface treatment composition further may include 0.01-1 parts by weight of a defoamer and 1-2 parts by weight of a wetting agent.

The metal material may be one selected from among a stainless steel sheet, a galvanized steel sheet, an aluminum plated steel sheet, and an alloy plated steel sheet.

### [Advantageous Effects]

The metal surface treatment composition of the present invention may secure required properties such as corrosion resistance, workability, and the like, and also slip resistance such that a phenomenon in which a metal material slips in processing, pipe making, and the like, may be prevented.

### [Description of Drawings]

FIG. 1 is a result of measurement of a coefficient of friction of embodiment 1; and
FIG. 2 is a result of measurement of a coefficient of friction of comparative example 1.

### [Best Mode for Invention]

A preferable embodiment of the present invention will be described with reference to various embodiments. However, the embodiment of the present invention may be modified to different forms of embodiments, and the scope of the present invention is not limited to the embodiment described below.

The present invention relates to a metal surface treatment composition having excellent slip resistance, and a metal material to which the same is applied.

The metal surface treatment composition may include 10-30 parts by weight of a silane-based compound, 0.5-6 parts by weight of an organic acid, 0.1-3 parts by weight of a vanadium compound, 0.1-3 parts by weight of a magnesium compound, 0.5-3 parts by weight of a wax and a balance of a solvent, wherein the wax is a polypropylene wax and wherein the weight avreage molecular weight of the wax is 2,000-10,000.

The silane-based compound may be hydrolyzed in water and may generate siloxide bonds, may be strongly bonded with a metal material and may work as a binder for bonding various inorganic materials, and may be added to improve adhesion, corrosion resistance, and the like, of a coating layer. A silane-based compound is not limited thereto, however. For example, preferably, a silane-based compound may be one or more selected from a group consisting of epoxy-based silane and amino-based silane.

As epoxy-based silane, vinylmethoxy silane, vinyltrimethoxy silane, vinylepoxy silane, vinyltriepoxy silane, 3-aminopropyltriepoxy silane, 3-glycidoxy propyltrimethoxy silane, 3-methacryloxypropyltrimethoxy silane, 3-mercaptopropyl trimethoxy silane, N-(1,3-dimethylbutylidene)-3-(triepoxy silane)-1-propanamine, N,N-bis[3-(trimethoxysilyl) propyl] ethylenediamine, or the like, may be used, and preferably, 3-glycidoxy propyltrimethoxy silane may be used.

Also, as amino-based silane, N-(β-aminoethyl)-γ-amino propylmethyldimethoxysilane, N-(β-aminoethyl)-γ-aminopropyltrimethoxysilane, γ-glycidoxypropyltriethoxysilane, γ-glycine cydoxitrimethyldimethoxysilane, 2-(3,4-epoxycyclohexyl)ethyltrimethoxysilane, γ-methacryloxypropyltrimethoxysilane, γ-methacryloxypropyltriethoxysilane, γ-mercaptopropyltrimethoxysilane, γ-mercapto propyltriethoxysilane, 3-amino propyl triethoxy silane, N-[2-(vinylbenzylamino)ethyl]-3-aminopropyltrimethoxysilane, or the like, may be used, and preferably, 3-amino propyl triethoxy silane may be used.

A preferable content of the silane-based compound may be 10-30 parts by weight, and may be 10-20 parts by weight more preferably. When a content of the silane-based compound is less than 10 parts by weight, corrosion resistance and adhesion may be deteriorated. When the content exceeds 30 parts by weight, solution stability may degrade, which may not be preferable.

An organic acid included in the metal surface treatment composition of the present invention may be necessary to improve adhesion between the metal material and a coating layer. A type of an organic acid is not limited to any particular type. However, for example, preferably, an organic acid may be one or more selected from a group consisting of formic acid, phosphoric acid and acetic acid. A preferable content of an organic acid may be 0.5-6 parts by weight. When a content of an organic acid is less than 0.5 parts by weight, etching properties may be deteriorated. When the content exceeds 6 parts by weight, stability of a solution and property of a painted film may be deteriorated.

The vanadium compound and the magnesium compound may form a stable metal chelate compound by inducing chelate reaction, and accordingly, cohesion force between metal atoms of the metal material and the coating layer may increase such that corrosion resistance and adhesion of a painted film may improve.

As the vanadium compound, vanadylacetylacetonate, vanadium pentoxide, metavanadine acid, ammonium metavanadate, sodium metavanadate, vanadium oxychloride, vanadium trioxide, vanadium dioxide, vanadium oxysulfate, vanadiumoxyacetylacetate, vanadium acetyl acetate, vanadium trichloride, or the like, may be used, and preferably, the vanadium compound may be vanadylacetylacetonate. A preferable content of the vanadium compound may be 0.1-3 parts by weight. When a content of the vanadium compound is less than 0.1 parts by weight, the formation of metal chelate may be difficult. When the content exceeds 3 parts by weight, an unreacted metal compound may remain such that property of a solution may be deteriorated.

As the magnesium compound, magnesium oxide, magnesium sulfate, magnesium chloride, magnesium hydroxide, or the like, may be used, and preferably, magnesium oxide may be used. A preferable content of the magnesium compound may be 0.1-3 parts by weight. When a content of the magnesium compound is less than 0.1 parts by weight, the formation of metal chelate may be difficult. When the content exceeds 3 parts by weight, an unreacted metal compound may remain such that property of a solution may be deteriorated.

The metal surface treatment composition may include a wax. Generally, as a metal surface treatment composition for a steel sheet, or the like, a wax having a low melting point may be introduced to improve workability, and a wax may be used to provide lubricity by improving surface slip of a painted film at room temperature. However, differently from the above, as a wax is added to improve slip resistance in the present invention, a wax which does not have lubricity at room temperature, and which has a high melting point to increase friction properties. Accordingly, slip properties may decrease, and a coefficient of friction may increase.

A wax used for the metal surface treatment composition is a polypropylene wax having a weight average molecular weight of 2,000-10,000. As a polypropylene wax, a polypropylene wax generally used in the field may be used. For example, one or more selected from between AQUACER 593 and AQUACER 597 of BYK Chemie may be used. A wax may be included by 0.5-5 parts by weight preferably, and may be included by 0.5-3 parts by weight more preferably. When a content thereof is less than 0.5 parts by weight, a coefficient of friction may be high such that it may be difficult to slip resistance. When the content exceeds 5 parts by weight, slip resistance may be favorable, but a painted film may be unstable such that corrosion resistance may be defective.

As described above, in the present invention, a wax should not have lubricity and should increase a coefficient of friction, the wax should have a high melting point preferably, and more preferably, a melting point of a wax may be 130-160°C.

Preferably, a weight average molecular weight of a wax is 2,000-10,000. When a weight average molecular weight of a wax is less than 2,000, a wax may melt at low temperature such that slip properties may improve. When the weight average molecular weight exceeds 10,000, the wax may work as polypropylene plastic particles, instead of working as a wax, such that incompatibility with a solution may degrade and the wax may be precipitated, or the wax may be detached from a boundary surface with a solution after the solution is dried.

Meanwhile, the metal surface treatment composition may further include 0.01-1 parts by weight of a defoamer and 1-2 parts by weight of a wetting agent.

Bubbles generated in a coating composition may be generated in various stages of a process, and may cause a surface defect such as a crater phenomenon of a coating layer, weakened strength, and the like. Thus, it may be preferable to use a defoamer. As a defoamer, n-methylethanol amine may be used. A preferable content of a defoamer may be 0.01-1 parts by weight. When a content of a defoamer is less than 0.01 parts by weight, a defoaming effect may be insignificant. When the content exceeds 1 part by weight, a defoamer may become a cause for degradation of corrosion resistance and degradation of coating force of a coating layer.

Also, as a wetting agent added to improve wetting properties, isopropyl alcohol, 2-ethyl-1-hexanol, 2-butoxyethanol, dipropylene glycol, ethylene glycol, n-propyl alcohol, propylene glycol, a polyether siloxane copolymer based wetting agent may be used, and preferably, isopropyl alcohol may be used. A preferable content of a wetting agent may be 1-2 parts by weight. When a content of a wetting agent is less than 1 part by weight, an effect of improving wetting properties may be deteriorated, and adhesive force of a coating layer may degrade. When the content exceeds 2 parts by weight, property may not degrade but there may be no effect of improving wetting properties, which may not be economically preferable.

A solvent used in the present invention is not limited to any particular solvent, and water, ethanol, or the like, may be used. Preferably, a mixture of water and ethanol may be used, and more preferably, a mixture of 40-60 parts by weight of water and 10-20 parts by weight of ethanol may be used.

According to an embodiment of the present invention, a surface treatment metal material having excellent slip resistance including a metal material; and a coating layer formed on the metal material, and formed as a cured product of a metal surface treatment composition including 10-30 parts by weight of a silane-based compound, 0.5-6 parts by weight of an organic acid, 0.1-3 parts by weight of a vanadium compound, 0.1-3 parts by weight of a magnesium compound, 0.5-3 parts by weight of a wax and a balance of a solvent.

The coating layer may be a cured product of the metal surface treatment composition of the present invention, and may include a silane-based compound, an organic acid, a vanadium compound, a magnesium compound, a wax, a defoamer, and a wetting agent. A method of forming the coating layer may not be limited thereto. For example, one of methods such as roll-coating, spray-coating, slot-coating, impregnation coating, curtain coating, or the like, may be selected.

A preferable thickness of the coating layer may be 0.5-10µm. When a thickness of the coating layer is less than 0.5um, corrosion resistance may be weakened. When the thickness exceeds 10pm, workability may be weakened and manufacturing costs may increase, which may be problems.

As described above, the metal surface treatment composition of the present invention may include 0.5-5 parts by weight of a polypropylene wax which does not have lubricity at room temperature and has a high melting point to improve friction properties. Accordingly, as for the surface treatment metal material according to the present invention, the coating layer may have 0.4 or higher of a coefficient of friction, and more preferably, a coefficient of friction of the coating layer may be 0.4-0.6.

The surface treatment composition of the present invention may be used for various metal materials, and may be used for, for example, a stainless steel sheet, a galvanized steel sheet, an aluminum plated steel sheet, an alloy plated steel sheet, or the like, although not limited thereto. Also, required properties such as corrosion resistance, workability, and the like, and also slip resistance may be secured. Accordingly, slipping or falling off of a metal material may be prevented in processing, pipe making, and the like.

### [Mode for Invention]

### Embodiment

In the description below, the present invention will be described in greater detail through an embodiment. The embodiment described below is to describe the present invention in specific, and the present invention is not limited thereto.

A silane-based compound, an organic acid, a vanadium compound, a magnesium compound, and a wax were added to a solvent, and were stirred, thereby manufacturing a coating composition. As a solvent, a mixture of water and ethanol was used. As the silane-based compound, 3-glycidoxy propyl trimethoxy silane and 3-amino propyl triethoxy silane were used. Also, as an organic acid, formic acid and phosphoric acid were used, as the vanadium compound, vanadyl acetinacetonate was used, as the magnesium compound, magnesium oxide was used, and as a wax, a polypropylene wax, AQUACER 593 and AQUACER 597 of BYK Chemie were used.

Metal surface treatment compositions of embodiments 1 to 12 and comparative examples 1 to 8 were manufactured by adjusting the elements included in the compositions and contents thereof as in Tables 1 and 2. Thereafter, a galvanized steel sheet having a horizontal length of 75 mm and a vertical length of 150mm was coated with the coating compositions of embodiments 1 to 12 and comparative examples 1 to 8 by a thickness of 0.5um.

**[Table 1]**

| (Unit: Parts by weight) | Embodiment 1 | Embodiment 2 | Embodiment 3 | Embodiment 4 | Embodiment 5 | Embodiment 6 |
|---|---|---|---|---|---|---|
| Epoxy-based Silane | 15 | 15 | 15 | 15 | 15 | 15 |
| Amino-based Silane | 15 | 15 | 15 | 15 | 15 | 15 |
| Vanadium Compound | 0.5 | 0.5 | 0.5 | 0.5 | 0.5 | 0.5 |
| Magnesium Compound | 2 | 2 | 2 | 2 | 2 | 2 |
| Phosphoric Acid | 3 | 3 | 3 | 3 | 3 | 3 |
| Formic Acid | 3 | 3 | 3 | 3 | 3 | 3 |
| Polypropylene-based Aqueous Wax (Melting Point: 160°C, Molecular Weight 10000) | 0.2 | 0.5 | 1.5 | 3 | 5 | 7 |

**[Table 2]**

| (Unit: Parts by weight) | Embodiment 7 | Embodiment 8 | Embodiment 9 | Embodiment 10 | Embodiment 11 | Embodiment 12 |
|---|---|---|---|---|---|---|
| Epoxy-based Silane | 15 | 15 | 15 | 15 | 15 | 15 |
| Amino-based Silane | 15 | 15 | 15 | 15 | 15 | 15 |
| Vanadium Compound | 0.5 | 0.5 | 0.5 | 0.5 | 0.5 | 0.5 |
| Magnesium Compound | 2 | 2 | 2 | 2 | 2 | 2 |
| Phosphoric Acid | 3 | 3 | 3 | 3 | 3 | 3 |
| Formic Acid | 3 | 3 | 3 | 3 | 3 | 3 |
| Polypropylene-based Aqueous Wax (Melting Point:130°C, Molecular Weight 2000) | 0.2 | 0.5 | 1.5 | 3 | 5 | 7 |

**[Table 3]**

| (Unit: Parts by weight) | Compar ative Exampl e 1 (Cr Soluti on) | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 | Compa rativ e Examp le 8 |
|---|---|---|---|---|---|---|---|---|
| Epoxy-based Silane | - | 15 | 15 | 15 | 15 | 15 | 15 | 15 |
| Amino-based Silane | - | 15 | 15 | 15 | 15 | 15 | 15 | 15 |
| Vanadium Compound | - | 0.5 | 0.5 | 0.5 | 0.5 | 0.5 | 0.5 | 0.5 |
| Magnesium Compound | - | 2 | 2 | 2 | 2 | 2 | 2 | 2 |
| Phosphoric Acid | - | 3 | 3 | 3 | 3 | 3 | 3 | 3 |
| Formic Acid | - | 3 | 3 | 3 | 3 | 3 | 3 | 3 |
| Polyethylene Wax (Melting Point 60-100°C, Molecular Weight 600-1500) | - | - | 0.2 | 0.5 | 1.5 | 3 | 5 | 7 |

### Experimental Example

Solution stability of the metal surface treatment compositions of embodiments 1 to 12 and comparative examples 1 to 8 were examined. Also, corrosion resistance of a stainless steel sheet on which a cured product (a coating layer) of the metal surface treatment composition was formed was tested, and an Erichsen test was conducted, and thereafter, corrosion resistance was examined, and a coefficient of friction was measured. Results of the tests were listed in Tables 3 and 4. Specific experimental conditions and examination methods are as below.

### 1. Solution Stability

The metal surface treatment compositions of embodiments 1 to 12 and comparative examples 1 to 8 were stored in a thermostat of 40°C for one month, and thereafter, an increase of viscosity, gelling, and precipitation of the compositions were observed and examined under standards as below.
- Good: No changes in an increase of viscosity, gelling, and precipitation of the solution
- Defective: Changes in an increase of viscosity, gelling, and precipitation of the solution

### 2. Corrosion Resistance

5% of brine was continuously sprayed onto steel sheets which were coated with the coating compositions of embodiments 1 to 12 and comparative examples 1 to 8 by a thickness of 0.5µm at humidity of 95% and 35°C for 72 hours, and corrosion resistance was examined by observing an initial anti-rust area.

### 3. Corrosion Resistance After Erichsen Test

An Erichsen test was carried out on the steel sheets with 6mm, 5% of brine was continuously sprayed onto the steel sheets at humidity of 95% and 35°C, for 48 hours, and corrosion resistance was examined by observing an initial anti-rust area.

### 4. Coefficient of Friction

As for a coefficient of friction, the steel sheet was cut out in a size of A4, an area of friction TIP was controlled to be 2.9cm x 3.9cm, 600kgf weight was applied, the steel sheet was drawn at a drawing rate of 1000mm/min, and a coefficient of friction was measured with a moving distance of 200mm.

**[Table 4]**

| | Embodime nt 1 | Embodime nt 2 | Embodime nt 3 | Embodime nt 4 | Embodime nt 5 | Embodime nt 6 |
|---|---|---|---|---|---|---|
| Solution Stability | Good | Good | Good | Good | Precipit ation in Small Amount | Precipit ation in Small Amount |
| Corrosion Resistance (72hr) | White Rust 0% | White Rust 0% | White Rust 0% | White Rust 0% | White Rust 10% | White Rust 30% |
| Corrosion Resistance After Erichsen Test (48hr) | White Rust 0% | White Rust 0% | White Rust 0% | White Rust 0% | White Rust 30% | White Rust 50% |
| Coefficient of Friction | 0.25 | 0.53 | 0.5 | 0.47 | 0.51 | 0.5 |

**[Table 5]**

| | Embodime nt 7 | Embodime nt 8 | Embodime nt 9 | Embodime nt 10 | Embodime nt 11 | Embodime nt 12 |
|---|---|---|---|---|---|---|
| Solution Stability | Good | Good | Good | Good | Good | Precipit ation in Small Amount |
| Corrosion Resistance (72hr) | White Rust 0% | White Rust 0% | White Rust 0% | White Rust 0% | White Rust 0% | White Rust 20% |
| Corrosion Resistance After Erichsen Test (48hr) | White Rust 0% | White Rust 0% | White Rust 0% | White Rust 0% | White Rust 20% | White Rust 50% |
| Coefficient of Friction | 0.23 | 0.49 | 0.51 | 0.49 | 0.5 | 0.51 |

**[Table 6]**

| | Compara tive Example 1 (Cr Solutio n) | Compar ative Exampl e 2 | Compar ative Exampl e 3 | Compar ative Exampl e 4 | Compar ative Exampl e 5 | Compar ative Exampl e 6 | Compar ative Exampl e 7 | Compar ative Exampl e 8 |
|---|---|---|---|---|---|---|---|---|
| Solution Stability | Good | Good | Good | Good | Good | Good | Good | Good |
| Corrosion Resistance (72hr) | White Rust 0% | White Rust 0% | White Rust 0% | White Rust 0% | White Rust 50% | White Rust 100% | White Rust 100% | White Rust 100% |
| Corrosion Resistance | White Rust 0% | White Rust | White Rust | White Rust | White Rust | White Rust | White Rust | White Rust |
| After Erichsen Test (48hr) | | 0% | 0% | 0% | 60% | 100% | 100% | 100% |
| Coefficien t of Friction | 0.25 | 0.1386 | 0.13 | 0.12 | 0.098 | 0.088 | 0.09 | 0.09 |

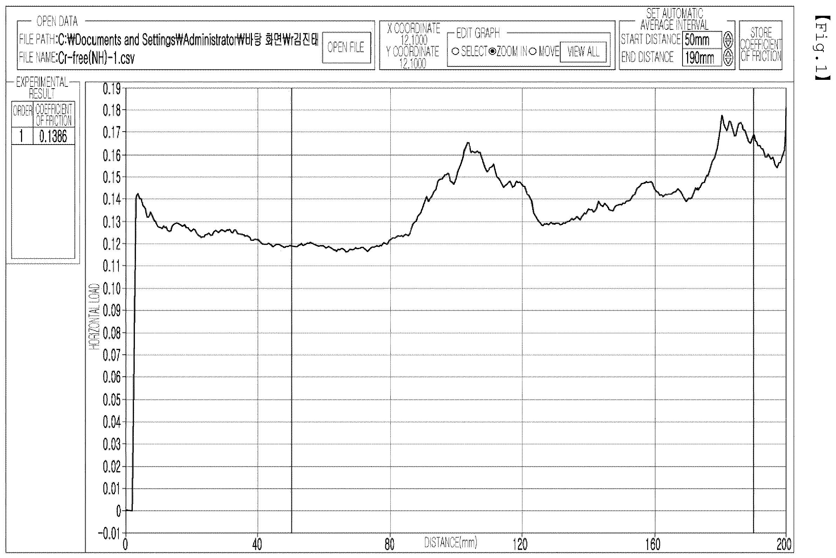

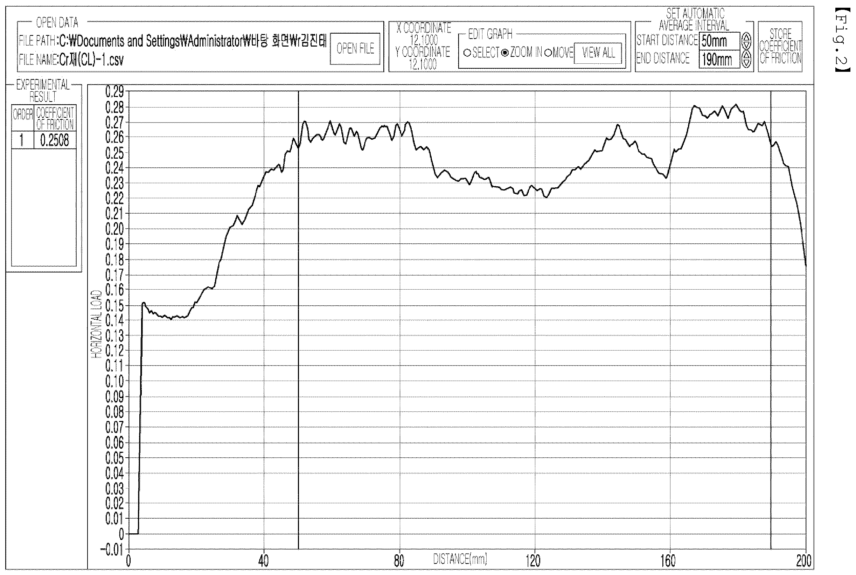

As indicated in Tables 4 to 6 and FIGS. 1 and 2, when the steel sheet was coated with the metal surface treatment composition, required properties such as corrosion resistance, and the like, was excellent, and a coefficient of friction was significantly increased.

## Claims

1. A chromium-free metal surface treatment composition, comprising:
10-30 parts by weight of a silane-based compound,
0.5-6 parts by weight of an organic acid,
0.1-3 parts by weight of a vanadium compound,
0.1-3 parts by weight of a magnesium compound,
0.5-3 parts by weight of a wax and a balance of a solvent,
wherein the wax is a polypropylene wax, and
wherein a weight average molecular weight of the wax is 2,000-10,000.

2. The chromium-free metal surface treatment composition of claim 1, wherein melting point of the wax is 130-160°C.

3. The chromium-free metal surface treatment composition of claim 1, wherein the organic acid is one or more selected from among formic acid, phosphoric acid, and acetic acid.

4. The chromium-free metal surface treatment composition of claim 1, wherein the silane-based compound is one or more selected from a group consisting of epoxy-based silane and amino-based silane.

5. The chromium-free metal surface treatment composition of claim 4, wherein the epoxy-based silane is one or more selected from among vinylmethoxy silane, vinyltrimethoxy silane, vinylepoxy silane, vinyltriepoxy silane, 3-aminopropyltriepoxy silane, 3-glycidoxy propyltrimethoxy silane, 3-methacryloxypropyltrimethoxy silane, 3-mercaptopropyl trimethoxy silane, N-(1,3-dimethylbutylidene)-3-(triepoxy silane)-1-propanamine, and N,N-bis[3-(trimethoxysilyl) propyl] ethylenediamine.

6. The chromium-free metal surface treatment composition of claim 4, wherein the amino-based silane is one or more selected from among N-(β-aminoethyl)-γ-amino propylmethyldimethoxysilane, N-(β-aminoethyl)-γ-ami nopropyltrimethoxysilane, γ-glycidoxypropyltriethoxysilane, γ-glycine cydoxitrimethyldimethoxysilane, 2-(3,4-epoxycyclohexyl)ethyltrimethoxysilane, γ-methacryloxypropyltrimethoxysilane, γ-methacryloxypropyltriethoxysilane, γ-mercaptopropyltrimethoxysilane, γ-mercapto propyltriethoxysilane, 3-amino propyl triethoxy silane, and N-[2-(vinylbenzylamino)ethyl]-3-aminopropyltrimethoxysilane.

7. The chromium-free metal surface treatment composition of claim 4, further comprising:
0.01-1 parts by weight of a defoamer and 1-2 parts by weight of a wetting agent.

8. The chromium-free metal surface treatment composition of claim 7, wherein the defoamer is n-methylethanol amine.

9. The chromium-free metal surface treatment composition of claim 7, wherein the wetting agent is one or more selected from among isopropyl alcohol, 2-ethyl-1-hexanol, 2-butoxyethanol, dipropylene glycol, ethylene glycol, n-propyl alcohol, and propylene glycol.

10. A chromium-free surface treated metal material having excellent slip resistance, comprising:
a metal material; and
a coating layer formed on the metal material, and formed as a cured product of a metal surface treatment composition including 10-30 parts by weight of a silane-based compound, 0.5-6 parts by weight of an organic acid, 0.1-3 parts by weight of a vanadium compound, 0.1-3 parts by weight of a magnesium compound, 0.5-3 parts by weight of a wax and a balance of a solvent,
wherein the wax is a polypropylene wax, and
wherein a weight average molecular weight of the wax is 2,000-10,000.

11. The chromium-free surface treated metal material of claim 10, wherein a thickness of the coating layer is 0.5-10µm.

12. The chromium-free surface treated metal material of claim 10, wherein a coefficient of friction of the coating layer is 0.4-0.6.

13. The chromium-free surface treated metal material of claim 10, wherein the metal material is one selected from among a stainless steel sheet, a galvanized steel sheet, an aluminum plated steel sheet, and an alloy plated steel sheet.

## Patentansprüche

1. Chromfreie Metalloberflächenbehandlungszusammensetzung, umfassend:
10-30 Gewichtsteile einer Verbindung auf Silanbasis,
0,5-6 Gewichtsteile einer organischen Säure,
0,1-3 Gewichtsteile einer Vanadiumverbindung,
0,1-3 Gewichtsteile einer Magnesiumverbindung,
0,5-3 Gewichtsteile eines Wachses und einen Rest aus einem Lösungsmittel,
wobei das Wachs ein Polypropylenwachs ist und
wobei ein gewichtsmittleres Molekulargewicht des Wachses 2.000-10.000 beträgt.

2. Chromfreie Metalloberflächenbehandlungszusammensetzung nach Anspruch 1, wobei ein Schmelzpunkt eines Wachses 130-160 °C beträgt.

3. Chromfreie Metalloberflächenbehandlungszusammensetzung nach Anspruch 1, wobei die organische Säure eine oder mehrere ist, ausgewählt aus Ameisensäure, Phosphorsäure und Essigsäure.

4. Chromfreie Metalloberflächenbehandlungszusammensetzung nach Anspruch 1, wobei die Verbindung auf Silanbasis eine oder mehrere ist, ausgewählt aus einer Gruppe bestehend Silan auf Epoxidbasis und Silan auf Aminobasis.

5. Chromfreie Metalloberflächenbehandlungszusammensetzung nach Anspruch 4, wobei das Silan auf Epoxidbasis eines oder mehrere ist, ausgewählt aus Vinylmethoxysilan, Vinyltrimethoxysilan, Vinylepoxysilan, Vinyltriepoxysilan, 3-Aminopropyltriepoxysilan, 3-Glycidoxypropyltrimethoxysilan, 3-Methacryloxypropyltrimethoxysilan, 3-Mercaptopropyltrimethoxysilan, N-(1,3-Dimethylbutyliden)-3-(triepoxysilan)-1-propanamin und N,N-Bis[3-(trimethoxysilyl)propyl]ethylendiamin.

6. Chromfreie Metalloberflächenbehandlungszusammensetzung nach Anspruch 4, wobei das Silan auf Aminobasis eines oder mehrere ist, ausgewählt aus N-(β-Aminoethyl)-γ-aminopropylmethyldimethoxysilan, N-(β-Aminoethyl)-γ-aminopropyltrimethoxysilan, γ-Glycidoxypropyltriethoxysilan, γ-Glycincydoxitrimethyldimethoxysilan, 2-(3,4-Epoxycyclohexyl)ethyltrimethoxysilan, γ-Methacryloxypropyltrimethoxysilan, γ-Methacryloxypropyltriethoxysilan, γ-Mercaptopropyltrimethoxysilan, γ-Mercaptopropyltriethoxysilan, 3-Aminopropyltriethoxysilan und N-[2-(Vinylbenzylamino)ethyl]-3-aminopropyltrimethoxysilan.

7. Chromfreie Metalloberflächenbehandlungszusammensetzung nach Anspruch 4, ferner umfassend:
0,01-1 Gewichtsteile eines Entschäumers und 1-2 Gewichtsteile eines Netzmittels.

8. Chromfreie Metalloberflächenbehandlungszusammensetzung nach Anspruch 7, wobei der Entschäumer N-Methylethanolamin ist.

9. Chromfreie Metalloberflächenbehandlungszusammensetzung nach Anspruch 7, wobei das Netzmittel eines oder mehrere ist, ausgewählt aus Isopropylalkohol, 2-Ethyl-1-hexanol, 2-Butoxyethanol, Dipropylenglykol, Ethylenglykol, n-Propylalkohol und Propylenglykol.

10. Chromfreies oberflächenbehandeltes Metallmaterial mit ausgezeichneter Rutschfestigkeit, umfassend:
ein Metallmaterial; und
eine Beschichtungsschicht, die auf dem Metallmaterial gebildet ist und als gehärtetes Produkt einer Metalloberflächenbehandlungszusammensetzung gebildet ist, die 10-30 Gewichtsteile einer Verbindung auf Silanbasis, 0,5-6 Gewichtsteile einer organischen Säure, 0,1-3 Gewichtsteile einer Vanadiumverbindung, 0,1-3 Gewichtsteile einer Magnesiumverbindung, 0,5-3 Gewichtsteile eines Wachses und einen Rest aus einem Lösungsmittel beinhaltet,
wobei das Wachs ein Polypropylenwachs ist und
wobei ein gewichtsmittleres Molekulargewicht des Wachses 2.000-10.000 beträgt.

11. Chromfreies oberflächenbehandeltes Metallmaterial nach Anspruch 10, wobei eine Dicke der Beschichtungsschicht 0,5-10 µm beträgt.

12. Chromfreies oberflächenbehandeltes Metallmaterial nach Anspruch 10, wobei ein Reibungskoeffizient der Beschichtungsschicht 0,4-0,6 beträgt.

13. Chromfreies oberflächenbehandeltes Metallmaterial nach Anspruch 10, wobei das Metallmaterial eines ist, das ausgewählt ist aus einem Edelstahlblech, einem galvanisierten Stahlblech, einem aluminiumplattierten Stahlblech und einem legierungsplattierten Stahlblech.

## Revendications

1. Composition de traitement de surface métallique sans chrome, comprenant :
10 à 30 parties en poids d'un composé à base de silane,
0,5 à 6 parties en poids d'un acide organique,
0,1 à 3 parties en poids d'un composé de vanadium,
0,1 à 3 parties en poids d'un composé de magnésium,
0,5 à 3 parties en poids d'une cire et un reste d'un solvant,
dans laquelle la cire est une cire de polypropylène, et
dans laquelle un poids moléculaire moyen en poids de la cire est de 2000 à 10 000.

2. Composition de traitement de surface métallique sans chrome selon la revendication 1, dans laquelle un point de fusion de la cire est de 130 à 160 °C.

3. Composition de traitement de surface métallique sans chrome selon la revendication 1, dans laquelle l'acide organique est un ou plusieurs choisis parmi l'acide formique, l'acide phosphorique et l'acide acétique.

4. Composition de traitement de surface métallique sans chrome selon la revendication 1, dans laquelle le composé à base de silane est un ou plusieurs choisis dans un groupe consistant en un silane à base d'époxy et un silane à base d'amino.

5. Composition de traitement de surface métallique sans chrome selon la revendication 4, dans laquelle le silane à base d'époxy est un ou plusieurs choisis parmi le vinylméthoxy silane, le vinyltriméthoxy silane, le vinylépoxy silane, le vinyltriépoxy silane, le 3-aminopropyltriépoxy silane, le 3-glycidoxy propyltriméthoxy silane, le 3-méthacryloxypropyltriméthoxy silane, le 3-mercaptopropyl triméthoxy silane, la N-(1,3-diméthylbutylidène)-3-(triépoxy silane)-1-propanamine, et la N,N-bis[3-(triméthoxysilyl)propyl]éthylènediamine.

6. Composition de traitement de surface métallique sans chrome selon la revendication 4, dans laquelle le silane à base d'amino est un ou plusieurs choisis parmi le N-(β-aminoéthyl)-γ-aminopropylméthyldiméthoxysilane, le N-(β-aminoéthyl)-γ-aminopropyltriméthoxysilane, le γ-glycidoxypropyltriéthoxysilane, le γ-glycine cydoxitriméthyldiméthoxysilane, le 2-(3,4-époxycyclohexyl)éthyltriméthoxysilane, le γ-méthacryloxypropyltriméthoxysilane, le γ-méthacryloxypropyltriéthoxysilane, le γ-mercaptopropyltriméthoxysilane, le γ-mercapto propyltriéthoxysilane, le 3-amino propyltriéthoxy silane, et le N-[2-(vinylbenzylamino)éthyl]-3-aminopropyltriméthoxysilane.

7. Composition de traitement de surface métallique sans chrome selon la revendication 4, comprenant en outre :
0,01 à 1 partie en poids d'un agent antimousse et 1 à 2 parties en poids d'un agent mouillant.

8. Composition de traitement de surface métallique sans chrome selon la revendication 7, dans laquelle l'agent antimousse est la n-méthyléthanolamine.

9. Composition de traitement de surface métallique sans chrome selon la revendication 7, dans laquelle l'agent mouillant est un ou plusieurs choisis parmi l'alcool isopropylique, le 2-éthyl-1-hexanol, le 2-butoxyéthanol, le dipropylène glycol, l'éthylène glycol, l'alcool n-propylique et le propylène glycol.

10. Matériau métallique traité en surface sans chrome et présentant une excellente résistance au glissement, comprenant :
un matériau métallique ; et
une couche de revêtement formée sur le matériau métallique, et formée comme un produit durci d'une composition de traitement de surface métallique incluant 10 à 30 parties en poids d'un composé à base de silane, 0,5 à 6 parties en poids d'un acide organique, 0,1 à 3 parties en poids d'un composé de vanadium, 0,1 à 3 parties en poids d'un composé de magnésium, 0,5 à 3 parties en poids d'une cire et un reste d'un solvant,
dans lequel la cire est une cire de polypropylène, et
dans lequel un poids moléculaire moyen en poids de la cire est de 2000 à 10 000.

11. Matériau métallique traité en surface sans chrome selon la revendication 10, dans lequel une épaisseur de la couche de revêtement est de 0,5 à 10 µm.

12. Matériau métallique traité en surface sans chrome selon la revendication 10, dans lequel un coefficient de frottement de la couche de revêtement est de 0,4 à 0,6.

13. Matériau métallique traité en surface sans chrome selon la revendication 10, le matériau métallique étant une choisie parmi une tôle d'acier inoxydable, une tôle d'acier galvanisée, une tôle d'acier plaquée d'aluminium et une tôle d'acier plaquée d'alliage.
